# FASCICULE DE BREVET EUROPEEN

(11) **EP 3 641 327 B1**
(45) Date de publication et mention de la délivrance du brevet: **06.10.2021**
(21) Numéro de dépôt: 19203421.3
(22) Date de dépôt: 15.10.2019
(51) Int. Cl.: H04Q 1/02, H05K 5/02

(54) **COFFRET ÉLECTRIQUE À ACCÈS SÉCURISÉ**
STROMVERTEILUNGSKASTEN MIT GESICHERTEM ZUGANG
ELECTRICAL BOX WITH SECURE ACCESS

(30) Priorité: 18.10.2018 FR 1859662
(43) Date de publication de la demande: 22.04.2020
(73) Titulaire: Schneider Electric Industries SAS, 92500 Rueil Malmaison (FR)
(72) Inventeur: CAOUS, Philippe, 38050 Grenoble Cedex 9 (FR); POLLO, Stéphane, 38050 Grenoble Cedex 9 (FR)
(74) Mandataire: Brevalex

(56) Documents cités:
- US-A1- 2011 001 411
- US-A1- 2011 298 347

## Description

### DOMAINE TECHNIQUE

L'invention se situe dans le domaine des coffrets à accès sécurisé, notamment les coffrets électriques destinés à accueillir des équipements électriques tels que des équipements de commande ou de mesure pour un réseau de distribution d'électricité.

L'invention s'applique notamment à un coffret de téléconduite modulaire ou à un coffret de mesure modulaire mais s'applique plus généralement à tout type de coffret dont l'accès à l'intérieur du coffret doit être sécurisé.

### ÉTAT DE LA TECHNIQUE ANTÉRIEURE

Un coffret de téléconduite modulaire est destiné à la conduite et à la surveillance d'un réseau électrique haute tension ou d'un poste de transformation haute tension - basse tension. Par définition, le domaine basse tension recouvre les tensions supérieures à 50 V (volts) et inférieures ou égales à 500 V en courant alternatif et les tensions supérieures à 120 V et inférieures ou égales à 750 V en courant continu. Le domaine haute tension recouvre les tensions supérieures à 1000 V en courant alternatif ou 1500 V en courant continu. Un coffret de téléconduite modulaire contient typiquement un module d'alimentation, un module de communication et un ou plusieurs modules de mesure et de commande. Chaque module de mesure et de commande permet d'effectuer des mesures de tension ou de courant sur un réseau de distribution d'électricité et de commander des actionneurs tels que des interrupteurs. Le module de communication est agencé pour permettre l'échange de données entre le ou les modules de mesure et de commande et un appareil distant. Le module d'alimentation est agencé pour alimenter les différents équipements électriques logés dans le coffret de téléconduite, en particulier le module de communication et les modules de mesure et de commande. Un coffret de mesure modulaire est destiné à la surveillance d'un réseau électrique ou d'un poste de transformation haute tension - basse tension. Il contient typiquement un module d'alimentation, un module de communication et un ou plusieurs modules de mesure. Chaque module de mesure permet d'effectuer des mesures de tension ou de courant. Un coffret de téléconduite ou de mesure peut comporter d'autres équipements tels qu'une batterie de secours.

Différents types d'opérations de contrôle et de maintenance sont susceptibles d'être effectués sur les équipements électriques logés dans ces coffrets. En fonction du type d'opération, des niveaux d'habilitation distincts sont nécessaires. En pratique, les coffrets doivent présenter plusieurs niveaux d'accès. Un premier niveau d'accès, dit « niveau 1 », doit permettre l'accès à une partie seulement des équipements électriques logés dans le coffret et/ou à des actionneurs de ces équipements. Un deuxième niveau d'accès, dit « niveau 2 », doit permettre un accès à l'ensemble des équipements électriques, y compris pour les remplacer. Le niveau 1 est en général accessible aux agents d'exploitation du réseau de distribution d'électricité tandis que le niveau 2 est réservé aux seuls agents de maintenance. Pour fournir ces niveaux d'accès distincts, un coffret de téléconduite ou de mesure peut comporter une porte principale, également appelée « porte extérieure », et une porte secondaire, également appelée « porte intérieure » ou « porte de sécurité ». La porte secondaire peut prendre une position de fermeture, dans laquelle elle donne accès à une partie seulement des équipements électriques, conformément au niveau 1, et une position d'ouverture, dans laquelle elle donne accès à l'ensemble des équipements électriques, conformément au niveau 2. La porte principale peut quant à elle prendre une position de fermeture, dans laquelle elle empêche tout accès aux équipements électriques en venant recouvrir la porte secondaire, et une position d'ouverture, dans laquelle elle donne accès à la porte secondaire, et donc à une partie des équipements électriques. En outre, certains coffrets peuvent présenter un niveau d'accès en visualisation, dit « niveau 0 », pour lequel il est uniquement possible de visualiser des indicateurs tels que des voyants lumineux des équipements électriques. Ce niveau 0 peut être obtenu en prévoyant une fenêtre transparente dans la porte principale.

La porte principale et la porte secondaire sont typiquement verrouillées par des moyens différenciés. Néanmoins, il existe un risque que la porte secondaire soit démontée du coffret, rendant accessible l'ensemble des équipements électriques par simple ouverture de la porte principale. Un tel retrait est notamment facilité lorsque la porte secondaire est montée en rotation sur un châssis du coffret à l'aide d'une charnière constituée d'un téton et d'un œillet ou analogue et que ces deux éléments peuvent être disjoints par une simple translation. Afin d'éviter le démontage de la porte secondaire, il est possible de prévoir des charnières plus complexes et/ou nécessitant un outillage spécial pour être démontées. Néanmoins, de telles solutions engendrent une augmentation du coût de fabrication et d'installation du coffret.

La demande US 2011/001411 A1 porte sur un assemblage de porte pour un coffret soumis à un environnement sévère. Le document décrit en particulier une charnière permettant le pivotement de la porte par rapport au coffret, et comprenant un écrou de serrage permettant d'ajuster verticalement la porte et de limiter le déplacement en translation le long de l'axe de pivotement sous l'effet des vibrations.

Compte tenu de ce qui précède, l'invention a pour objectif de fournir un coffret garantissant la préservation de ses niveaux d'accès en empêchant un démontage d'une porte. Dans un souci de simplicité d'assemblage et de limitation des coûts de fabrication, il est en outre souhaitable que l'articulation de cette porte ne soit pas complexifiée.

Par ailleurs, l'invention a également pour objectif de fournir un coffret pourvu d'équipements dans l'ensemble du volume de l'espace intérieur tout en permettant un accès aisé à chacun de ces équipements.

### EXPOSÉ DE L'INVENTION

À cet effet, une première branche de l'invention repose sur l'utilisation conjointe d'une charnière permettant un montage de la porte par une simple translation, d'un ensemble formé d'une protubérance et d'une butée empêchant cette translation dans une plage de pivotement donnée, et de moyens de limitation du pivotement pour restreindre le pivotement de la porte dans cette plage de pivotement donnée.

Plus précisément, la première branche de l'invention a pour objet un coffret, notamment un coffret électrique, comprenant :
▪ un châssis délimitant un espace intérieur pour le coffret et comprenant une ouverture permettant l'accès audit espace intérieur,
▪ une porte de sécurité,
▪ une charnière reliant mécaniquement la porte de sécurité au châssis, de manière à ce que la porte de sécurité puisse pivoter, autour d'un axe de pivotement, dans une plage de pivotement libre, la plage de pivotement libre incluant une position de fermeture, dans laquelle la porte de sécurité obture l'ouverture, et une position d'ouverture, dans laquelle la porte de sécurité laisse l'ouverture dégagée, la charnière étant agencée de manière à ce que la porte de sécurité puisse être montée et démontée du châssis par un déplacement en translation le long de l'axe de pivotement,
▪ des moyens de limitation du pivotement pour limiter le pivotement de la porte de sécurité dans une plage de pivotement réduite, la plage de pivotement réduite étant moins étendue que la plage de pivotement libre et incluant la position de fermeture et la position d'ouverture,
▪ une protubérance solidaire de la porte de sécurité et faisant saillie dans une direction parallèle à l'axe de pivotement, et
▪ une butée solidaire du châssis et faisant saillie dans une direction perpendiculaire à l'axe de pivotement,
la protubérance et la butée étant agencées pour définir, à l'intérieur de la plage de pivotement libre, une plage de translation bloquée, dans laquelle la protubérance est en vis-à-vis de la butée et limite le déplacement en translation de la porte de sécurité le long de l'axe de pivotement, et une plage de translation libre, dans laquelle la protubérance est dégagée de la butée, permettant un déplacement en translation de la porte de sécurité le long de l'axe de pivotement, la plage de translation libre étant disjointe de la plage de pivotement réduite.

Ainsi, un montage et un démontage de la porte de sécurité n'est possible qu'en dehors de la plage de pivotement réduite. Il est à noter que la protubérance et la butée peuvent éventuellement être agencées de manière à définir deux plages de translation libre. En limitant le pivotement de la porte de sécurité dans une plage dans laquelle le déplacement axial de la porte est empêché, il devient impossible de démonter la porte de sécurité.

La charnière peut être réalisée de manière simple. Dans un premier mode de réalisation, elle comprend :
▪ un premier téton et un deuxième téton solidaires du châssis, chaque téton s'étendant selon l'axe de pivotement, et
▪ un premier œillet et un deuxième oeillet formés dans la porte de sécurité,
les tétons et les œillets étant agencés de sorte que le premier téton puisse être inséré dans le premier œillet et que le deuxième téton puisse être inséré dans le deuxième œillet pour former une liaison pivot glissant selon l'axe de pivotement.

Chaque téton peut être formé par découpe dans un élément du châssis ou par fixation d'un élément rapporté. Par ailleurs, chaque téton peut être associé à une surface d'appui au niveau de sa base, agencée pour limiter un déplacement axial de la porte de sécurité en direction de l'autre téton.

Les longueurs de tétons sont de préférence distinctes, de sorte que le montage de la porte de sécurité sur le châssis puisse être réalisé en insérant le téton de plus grande longueur dans l'œillet correspondant sur une longueur supérieure à celle de l'autre téton, puis en insérant le téton de plus faible longueur dans l'autre œillet. Dans une configuration dite « verticale », dans laquelle l'axe de pivotement est vertical, le téton de plus grande longueur est de préférence le téton inférieur, c'est-à-dire le téton situé le plus bas sur l'axe de pivotement. Ainsi, lorsque l'œillet supérieur, c'est-à-dire l'œillet situé le plus haut sur l'axe de pivotement, est en appui sur la surface d'appui associée sous l'effet de la gravité, les deux tétons restent insérés dans leur œillet respectif.

Dans un deuxième mode de réalisation, la charnière comprend :
▪ un premier téton et un deuxième téton solidaires de la porte de sécurité, chaque téton s'étendant selon l'axe de pivotement, et
▪ un premier œillet et un deuxième œillet formés dans le châssis,
les tétons et les œillets étant agencés de sorte que le premier téton puisse être inséré dans le premier œillet et que le deuxième téton puisse être inséré dans le deuxième œillet pour former une liaison pivot glissant selon l'axe de pivotement.

Selon une forme particulière de réalisation, la protubérance est positionnée à proximité de l'axe de pivotement. Dans le premier mode de réalisation, la protubérance peut notamment être adjacente à l'un des œillets formés dans la porte de sécurité et, dans le deuxième mode de réalisation, la protubérance peut notamment être adjacente à l'un des tétons solidaires de la porte de sécurité. Cette forme de réalisation présente l'avantage de nécessiter une butée dont les dimensions sont relativement faibles pour couvrir toute la plage de pivotement réduite.

La porte de sécurité peut comporter une plaque de tôle. La protubérance peut alors être formée par pliage de la plaque de tôle. En particulier, la plaque de tôle peut être pliée de manière à présenter au moins une façade, un premier rebord et un deuxième rebord s'étendant dans des plans perpendiculaires au plan de la façade et parallèles entre eux. La protubérance peut alors être formée par pliage du premier montant ou du deuxième montant.

Dans d'autres formes de réalisation, la protubérance est formée par un élément rapporté. À titre d'exemple, la protubérance peut être formée par une vis ou un élément soudé.

Par ailleurs, chaque œillet peut être formé par usinage de la porte de sécurité. En particulier, un premier œillet peut être formé par perçage du premier montant et un deuxième œillet peut être formé par perçage du deuxième montant.

Le coffret selon l'invention peut comprendre, en outre une porte extérieure montée sur le châssis et pouvant être déplacée entre une position de fermeture, dans laquelle elle empêche l'accès à la porte de sécurité en position de fermeture, et une position d'ouverture, dans laquelle elle autorise l'accès à la porte de sécurité. Dans la position de fermeture, la porte extérieure obture également l'ouverture du châssis et, dans la position d'ouverture, elle laisse cette ouverture dégagée. La porte extérieure permet ainsi d'apporter un niveau d'accès distinct de la porte de sécurité.

La porte extérieure peut notamment être montée en liaison pivot sur le châssis selon un axe de rotation parallèle à l'axe de pivotement. L'axe de rotation est éventuellement confondu avec l'axe de pivotement.

Dans un mode de réalisation, la porte extérieure est agencée pour que, dans la position d'ouverture, elle limite le pivotement de la porte de sécurité dans la plage de pivotement réduite. Autrement dit, la porte extérieure en position d'ouverture empêche la porte de sécurité de pivoter dans le sens de l'ouverture au-delà d'une certaine limite. Cette limite peut définir la position d'ouverture de la porte de sécurité.

Dans un autre mode de réalisation, compatible avec le précédent, la plage de pivotement libre inclut une position rentrée, dans laquelle la porte de sécurité s'introduit dans l'espace intérieur du coffret, le coffret étant agencé pour accueillir des équipements dans l'espace intérieur, lesdits équipements formant les moyens de limitation du pivotement. Ainsi, la porte de sécurité peut être montée et démontée tant que les équipements ne sont pas installés dans l'espace intérieur du coffret, mais devient indémontable après installation de ces équipements.

La porte extérieure et les équipements accueillis dans l'espace intérieur du coffret forment ainsi des moyens de limitation du pivotement pour limiter le pivotement de la porte de sécurité dans la plage de pivotement réduite. Tout autre dispositif peut être prévu pour limiter le pivotement de la porte de sécurité. En particulier, des butées peuvent être fixées sur la porte de sécurité ou le châssis, par exemple par collage, soudage ou brasage.

La porte de sécurité peut comporter un orifice permettant l'accès à une région prédéterminée de l'espace intérieur du coffret alors que la porte de sécurité est en position de fermeture. Lorsque le coffret comprend une porte extérieure, l'orifice de la porte de sécurité constitue un premier niveau d'accès, dit « niveau 1 », permettant d'accéder aux équipements installés dans la région prédéterminée dès lors que la porte extérieure est en position d'ouverture. La porte de sécurité en elle-même constitue un deuxième niveau d'accès, dit « niveau 2 ». Dans la position d'ouverture, elle permet l'accès à l'ensemble des équipements.

La porte extérieure peut comporter une fenêtre agencée pour être située en regard de l'orifice de la porte de sécurité lorsque la porte extérieure et la porte de sécurité sont en position de fermeture. La fenêtre et l'orifice constituent alors un troisième niveau d'accès, dit « niveau 0 ».

Une deuxième branche de l'invention repose sur l'utilisation d'un support basculant agencé pour recevoir un ou plusieurs équipements tels que des équipements électriques et pour pouvoir prendre une première position, dans laquelle le support basculant et le ou les équipements portés par ce support basculant s'inscrivent dans l'espace intérieur du coffret, et une deuxième position, dans laquelle le support basculant et le ou les équipements s'inscrivent au moins partiellement en dehors de l'espace intérieur du coffret. Dans la deuxième position, l'espace laissé libre par le support basculant et le ou les équipements fournit un accès facilité à d'autres équipements installés dans le coffret.

Plus précisément, la deuxième branche de l'invention a pour objet un coffret, notamment un coffret électrique, comprenant :
▪ un châssis délimitant un espace intérieur pour le coffret et comprenant une ouverture permettant l'accès audit espace intérieur,
▪ une porte de sécurité, agencée pour pouvoir prendre une position de fermeture, dans laquelle elle obture l'ouverture, et une position d'ouverture, dans laquelle elle laisse l'ouverture dégagée, et
▪ un support basculant agencé pour recevoir un équipement, le support basculant étant monté sur le châssis de manière à pouvoir être basculé entre une position opérationnelle, dans laquelle le support basculant et l'équipement s'inscrivent dans l'espace intérieur du coffret, et une position basculée, dans laquelle le support basculant et l'équipement s'inscrivent au moins partiellement en dehors de l'espace intérieur du coffret.

L'espace intérieur du coffret comprend par exemple une région antérieure et une région postérieure, la région antérieure débouchant sur l'ouverture et la région postérieure étant située à l'arrière de la région antérieure par rapport à l'ouverture. Le support basculant et l'équipement peuvent alors occuper la région antérieure dans la position opérationnelle et laisser l'accès libre, depuis l'ouverture, à la région postérieure dans la position basculée.

La région antérieure et la région postérieure peuvent notamment être situées dans une partie inférieure de l'espace intérieur. Le support basculant est alors avantageusement apte à pivoter autour d'un axe de basculement situé à proximité d'une extrémité inférieure de la région antérieure et à proximité d'une extrémité postérieure de la région antérieure. Ainsi, le support basculant dégage au maximum la région antérieure dans la position basculée.

Le coffret peut comporter, en outre, un ensemble de guidage pour le support basculant. L'ensemble de guidage comporte par exemple une rainure de guidage formée sur le support basculant ou le châssis et un ergot de guidage solidaire du châssis ou du support basculant, respectivement, l'ensemble de guidage étant agencé pour que l'ergot de guidage puisse coulisser dans la rainure de guidage de manière à guider le basculement du support basculant. L'ensemble de guidage peut comporter deux sous-ensembles comportant chacun une rainure de guidage et un ergot de guidage coopérant l'un avec l'autre. Les sous-ensembles peuvent être disposés sur des côtés opposés du support basculant.

L'ensemble de guidage peut comporter, en outre, une première rainure d'extraction formée sur le support basculant ou le châssis, respectivement, la première rainure d'extraction s'étendant entre la rainure de guidage et un bord du support basculant ou du châssis, respectivement, l'ensemble de guidage étant agencé pour que l'ergot de guidage puisse coulisser dans la première rainure d'extraction de manière à libérer le support basculant du châssis.

Le coffret peut également comporter un ensemble de pivotement pour le support basculant, l'ensemble de pivotement comportant un orifice de pivotement formé sur le support basculant ou le châssis et un ergot de pivotement solidaire du châssis ou du support basculant, respectivement, l'ensemble de pivotement étant agencé pour que l'ergot de pivotement puisse s'insérer dans l'orifice de pivotement de manière à former une liaison pivot glissant.

L'ensemble de pivotement peut comporter, en outre, une deuxième rainure d'extraction s'étendant entre l'orifice de pivotement et un bord du support basculant ou du châssis, respectivement, l'ensemble de pivotement étant agencé pour que l'ergot de pivotement puisse coulisser dans la deuxième rainure d'extraction de manière à libérer le support basculant du châssis. Il est à noter que l'ensemble de guidage et l'ensemble de pivotement peuvent être agencés pour permettre des coulissements simultanés de l'ergot de guidage et de l'ergot de pivotement dans les rainures d'extraction ou des coulissements successifs et/ou alternés.

### BRÈVE DESCRIPTION DES DESSINS

D'autres caractéristiques, détails et avantages de l'invention ressortiront à la lecture de la description qui va suivre, donnée uniquement à titre d'exemple et faisant référence aux dessins annexés sur lesquels :
- les figures 1A, 1B et 1C représentent, dans une vue en perspective, un exemple de coffret électrique selon l'invention comprenant une porte extérieure et une porte de sécurité dans différentes positions d'ouverture et de fermeture ;
- les figures 2A et 2B représentent, dans une vue en perspective et dans une vue de côté, respectivement, un capot d'un châssis du coffret électrique des figures 1A, 1B et 1C, et la figure 2C représente, dans une vue en perspective, un fond du châssis de ce coffret électrique ;
- la figure 3 représente, dans une vue en perspective, la porte de sécurité du coffret électrique ;
- la figure 4 représente un exemple de procédé de montage de la porte de sécurité et de la porte extérieure du coffret électrique ;
- les figures 5A, 5B et 5C illustrent, dans une vue en perspective, le châssis et la porte de sécurité à l'issue d'une première étape du montage de la porte de sécurité ;
- les figures 6A et 6B illustrent, dans une vue en perspective, le châssis et la porte de sécurité à l'issue d'une étape ultérieure du montage de la porte de sécurité ;
- les figures 7A et 7B illustrent, dans une vue en perspective, le châssis et la porte de sécurité à la fin du montage de la porte de sécurité ;
- la figure 8 représente, dans une vue de dessus en coupe, le coffret électrique à la fin du montage de la porte de sécurité et de la porte extérieure ;
- la figure 9 représente les différentes plages angulaires impliquées par l'invention dans le pivotement de la porte de sécurité ;
- les figures 10A et 10B représentent la porte de sécurité dans deux positions d'ouverture, l'une étant bloquée en translation et l'autre étant libre en translation ;
- la figure 11 représente, dans une vue en perspective, le support basculant du coffret électrique ;
- les figures 12A, 12B et 12C représentent, dans une vue de côté, le support basculant et le fond du châssis dans une position relevée, dans une position intermédiaire et dans une position basculée ;
- les figures 13A et 13B représentent, dans une vue de face et dans une vue de côté, respectivement, le châssis et le support basculant dans la position basculée.

### EXPOSÉ DÉTAILLÉ DE MODES DE RÉALISATION PARTICULIERS

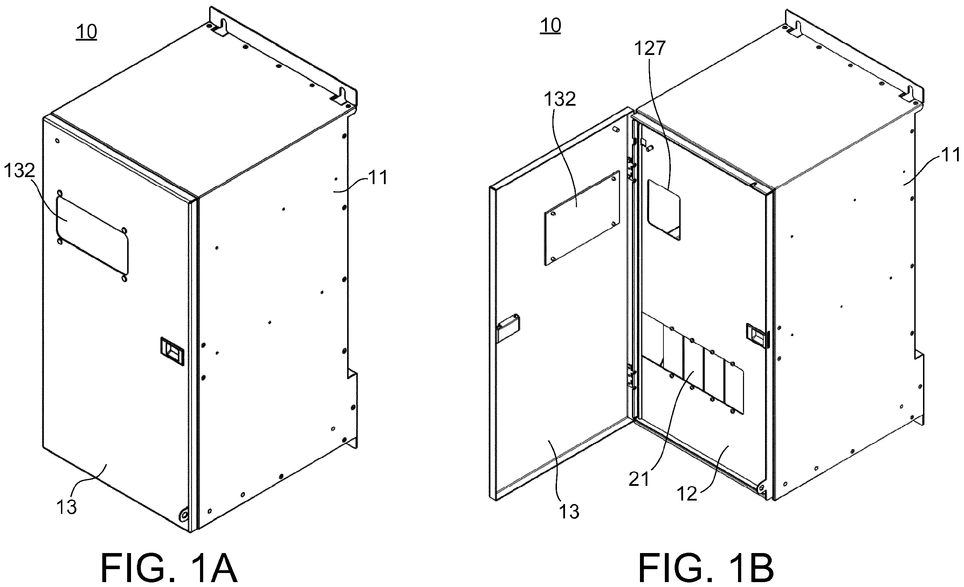

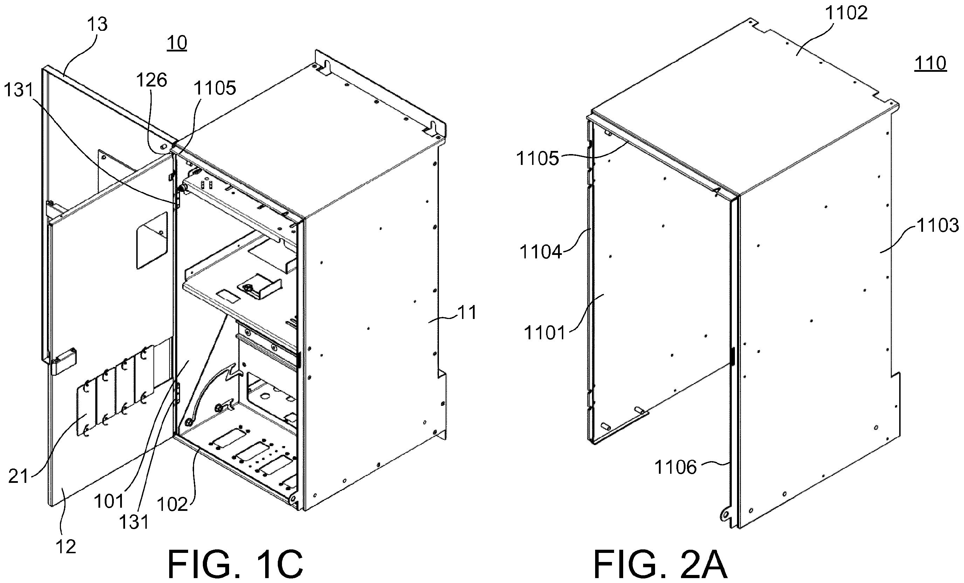

Les figures 1A, 1B et 1C représentent, dans une vue en perspective, un exemple de coffret électrique selon l'invention. Le coffret électrique 10 comporte un châssis 11, une porte de sécurité 12, une porte extérieure 13 et un support basculant 14. Sur les figures 1A, 1B et 1C, le coffret électrique 10 est respectivement représenté avec les portes 12 et 13 en position de fermeture, avec la porte extérieure 13 en position d'ouverture et la porte de sécurité 12 en position de fermeture, et avec les portes 12 et 13 en position d'ouverture. Le châssis 11 délimite un espace intérieur 101 pour le coffret 10 accessible depuis une ouverture 102 ménagée sur une face avant du coffret électrique 10. Chacune des portes 12 et 13 est agencée pour obturer l'ouverture 102 en position de fermeture. La porte de sécurité 12 forme une porte intérieure dans le sens où, en position de fermeture, elle peut être recouverte par la porte extérieure 13.

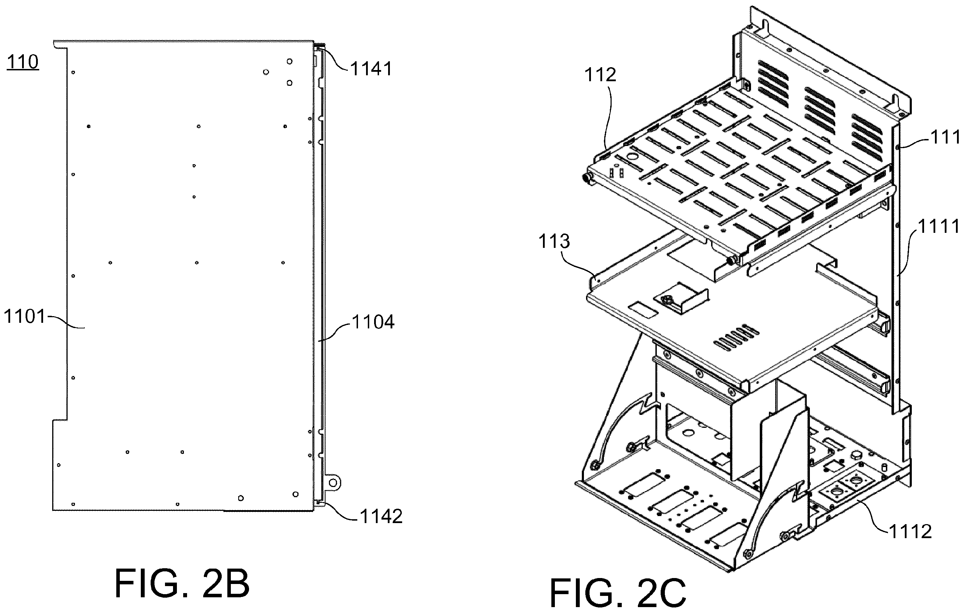

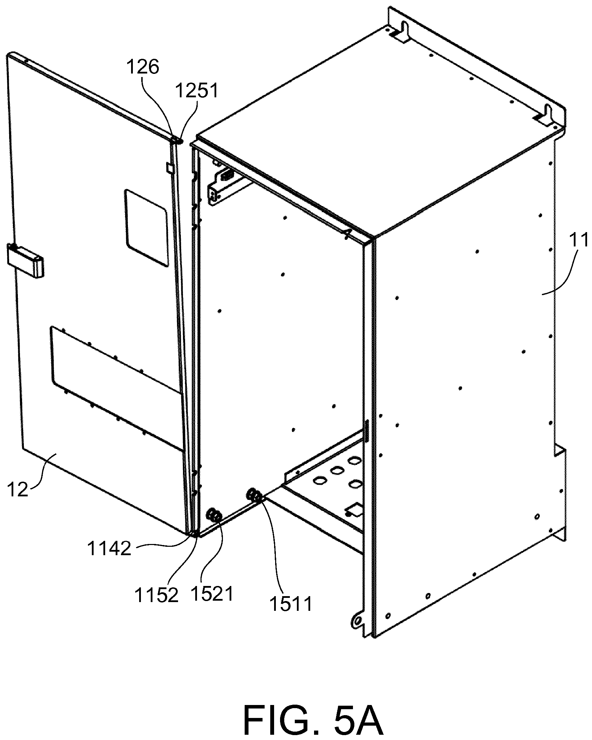

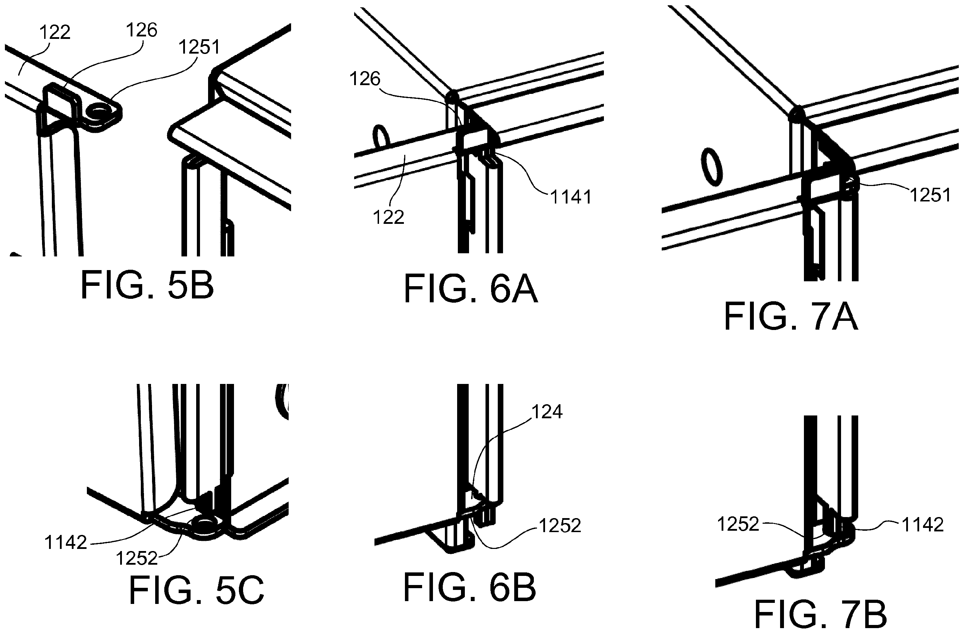

Les figures 2A, 2B et 2C représentent le châssis 11 du coffret électrique 10. Le châssis 11 comprend un capot 110 et un fond 111. Les figures 2A et 2B représentent le capot 110 dans une vue en perspective et dans une vue de côté, respectivement, et la figure 2C représente le fond 111 dans une vue en perspective. Le capot 110 est, dans cet exemple de réalisation, formé par une plaque de tôle pliée en forme de U. Les trois branches du U forment respectivement une paroi gauche 1101, une paroi supérieure 1102 et une paroi droite 1103 du châssis 11. Chacune de ces parois comprend un rebord du côté de l'ouverture 102, à savoir un rebord gauche 1104, un rebord supérieur 1105 et un rebord droit 1106. Le fond 111 est également formé par une plaque de tôle pliée en forme de L. Les deux branches du L forment respectivement une paroi arrière 1111 et une paroi inférieure 1112. Le châssis 11 comprend en outre un plateau supérieur 112 et un plateau intermédiaire 113, visibles sur les figures 1C et 2C. Le plateau supérieur 112 est coulissant dans un plan horizontal, parallèle à la paroi supérieure 1102. Il est monté sur deux rails latéraux fixés chacun à la paroi arrière 1111 et à l'une des parois gauche 1101 et droite 1103. Le plateau intermédiaire 113 est fixé à la paroi arrière 1111 et aux parois gauche 1101 et droite 1103. Les plateaux 112 et 113 sont agencés pour accueillir des équipements électriques, non représentés. Comme cela sera mieux visible sur les figures 5, 6 et 7, le châssis 11 comprend un téton supérieur 1141 s'étendant vers le haut depuis une extrémité supérieure du rebord gauche 1104 et un téton inférieur 1142 s'étendant vers le bas depuis une extrémité inférieure du rebord gauche 1104. Les tétons 1141 et 1142, désignés globalement par la référence 114, forment un axe de pivotement pour la porte de sécurité 12. Le support basculant 14 occupe une région basse antérieure de l'espace intérieur 101, en avant d'une région basse postérieure.

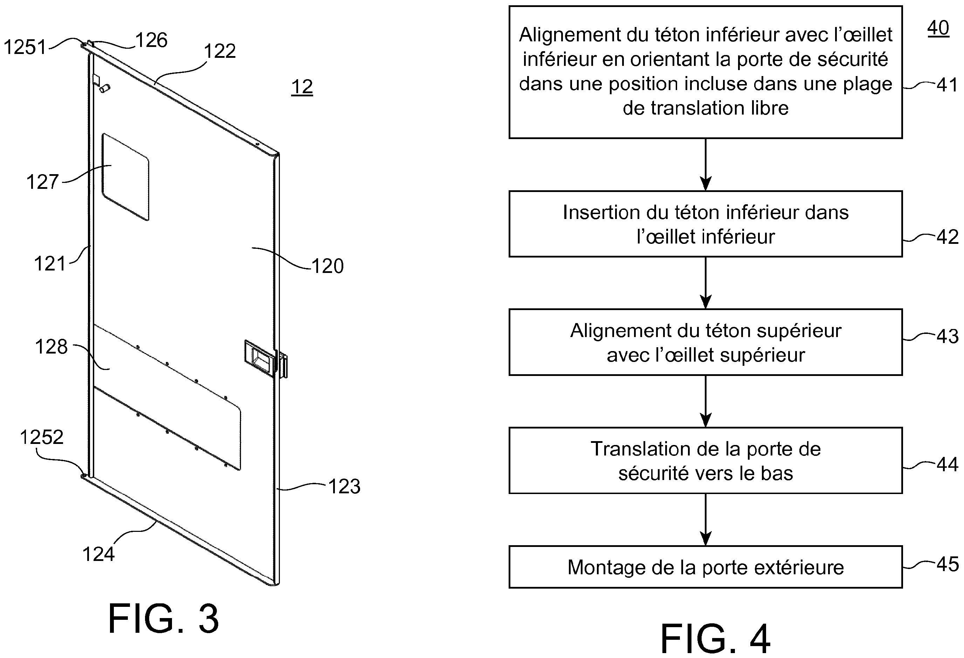

La figure 3 représente, dans une vue en perspective, la porte de sécurité 12 du coffret électrique 10. La porte de sécurité 12 est formée par pliage d'une plaque de tôle. Elle comporte une façade 120, un rebord gauche 121, un rebord supérieur 122, un rebord droit 123 et un rebord inférieur 124. La porte de sécurité 12 comporte en outre un œillet supérieur 1251 formé sur le rebord supérieur 122 et un œillet inférieur 1252 formé sur le rebord inférieur 124. Les œillets 1251 et 1252, désignés globalement par la référence 125, sont situés au voisinage du rebord gauche 121. Ils sont agencés de manière à pouvoir être insérés dans les tétons 1141 et 1142 pour former une liaison pivot glissant. Selon une particularité de l'invention, la porte de sécurité 12 comporte une protubérance 126 s'étendant vers le haut depuis le rebord supérieur 122. Cette protubérance est destinée à coopérer avec une butée solidaire du châssis, en l'espèce le rebord supérieur 1105 du châssis 11, comme cela sera expliqué ci-après. La protubérance 126 prend la forme d'une patte obtenue par pliage du rebord supérieur 122. La porte de sécurité 12 comporte, en outre, un premier orifice 127 et un deuxième orifice 128 formés dans la façade 120 et permettant d'accéder à des régions prédéterminées de l'espace intérieur 101 sans avoir à ouvrir la porte de sécurité 12. Par ailleurs, des caches 21, visibles sur les figures 1B et 1C, peuvent être montés dans les orifices 127, 128 afin de les obturer en totalité ou en partie.

En se référant à nouveau aux figures 1A, 1B et 1C, la porte extérieure 13 est montée sur la paroi gauche 1101 du châssis 11 par l'intermédiaire d'une charnière 131. La charnière 131 forme une liaison pivot selon un axe de rotation situé à proximité de l'ouverture 102. L'axe de rotation de la porte extérieure 13 peut être confondu ou non avec l'axe de pivotement de la porte de sécurité 12. La porte extérieure 13 comporte une fenêtre transparente 132 agencée pour permettre de visualiser une partie de l'espace intérieur 101. La fenêtre transparente 132 est agencée pour coïncider avec l'orifice 127 lorsque les deux portes 12 et 13 sont en position de fermeture. Il est alors possible de visualiser la région prédéterminée accessible depuis cet orifice 127 sans avoir à ouvrir la porte extérieure 13.

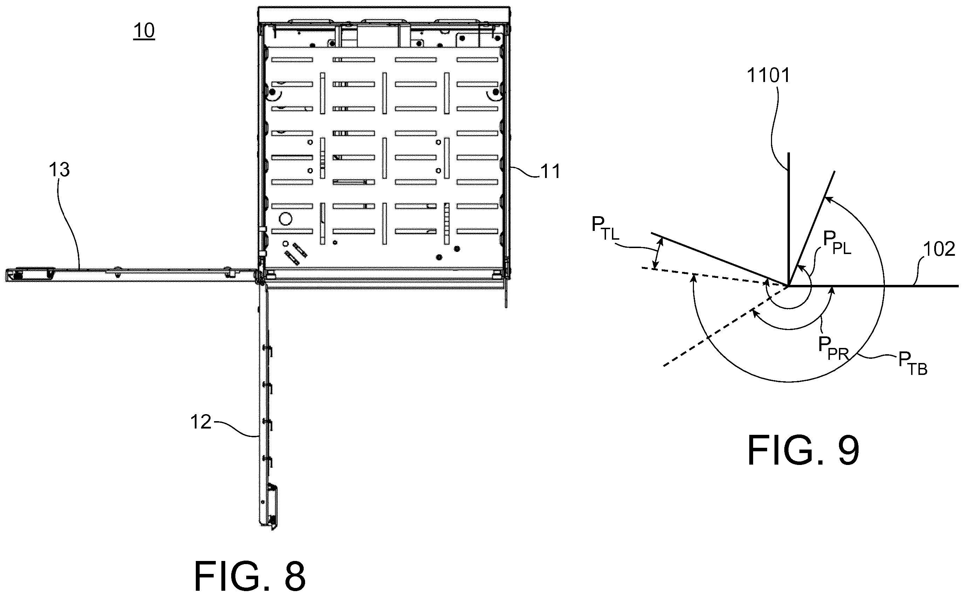

La figure 4 représente un exemple de procédé de montage de la porte de sécurité 12 et de la porte extérieure 13 du coffret électrique 10 décrit en référence aux figures 1 à 3, et les figures 5 à 8 illustrent le coffret électrique 10 à l'issue de différentes étapes de ce procédé de montage. Le procédé de montage 40 comprend une première étape 41, illustrée par les figures 5A, 5B et 5C, dans laquelle la porte de sécurité 12 est positionnée relativement au châssis 11 de manière à ce que l'œillet inférieur 1252 vienne en vis-à-vis du téton inférieur 1142 tout en étant orientée dans une position incluse dans une plage de pivotement appelée « plage de translation libre ». Cette plage de pivotement est définie ci-après. La figure 5A représente, dans une vue en perspective globale, le châssis 11 et la porte de sécurité 12 ; la figure 5B représente plus en détail le coin supérieur gauche du coffret électrique 10, avec l'œillet supérieur 1251 et la protubérance 126 formés sur le rebord supérieur 122 de la porte de sécurité 12 ; et la figure 5C représente plus en détail, le coin inférieur gauche du coffret électrique 10, avec l'œillet inférieur 1252 aligné avec le téton inférieur 1142. Dans une étape 42, le téton inférieur 1142 est inséré dans l'œillet inférieur 1252 par un déplacement axial de la porte de sécurité 12 vers le haut. La porte de sécurité 12 peut être déplacée jusqu'à ce qu'une surface du rebord inférieur 124 entourant l'œillet inférieur 1252 vienne en appui sur une extrémité inférieure du rebord gauche 1104. Dans une étape ultérieure 43, la porte de sécurité 12 est positionnée de manière à ce que l'œillet supérieur 1251 vienne en vis-à-vis du téton supérieur 1141. Les figures 6A et 6B représentent le coin supérieur gauche et le coin inférieur gauche du coffret électrique 10 à l'issue de l'étape 43. Le procédé 40 comprend ensuite une quatrième étape 44 dans laquelle le téton supérieur 1141 est inséré dans l'œillet supérieur 1251 par un déplacement axial de la porte de sécurité 12 vers le bas. La porte de sécurité 12 vient reposer par gravité sur une extrémité supérieure du rebord gauche 1104 du châssis 11. Les figures 7A et 7B représentent le coin supérieur gauche et le coin inférieur gauche du coffret électrique 10 à l'issue de l'étape 44. Dans une étape 45, la porte extérieure 13 est montée sur le châssis 11. À cet effet, comme représenté sur les figures 1B et 1C, des charnières 131 peuvent être utilisées, un premier élément de chaque charnière étant fixé sur la paroi gauche 1101 du châssis 11 et un deuxième élément de chaque charnière étant fixé sur la porte extérieure 13. La figure 8 représente, dans une vue de dessus en coupe, le coffret électrique 10 avec la porte de sécurité 12 et la porte extérieure 13 montées sur le châssis 11. Le plan de coupe est formé par un plan horizontal passant sous la paroi supérieure 1102. La porte extérieure 13 est représentée en position d'ouverture maximale. Un plan passant par la porte extérieure 13 forme un angle sensiblement égal à 180 degrés avec un plan passant par l'ouverture 102.

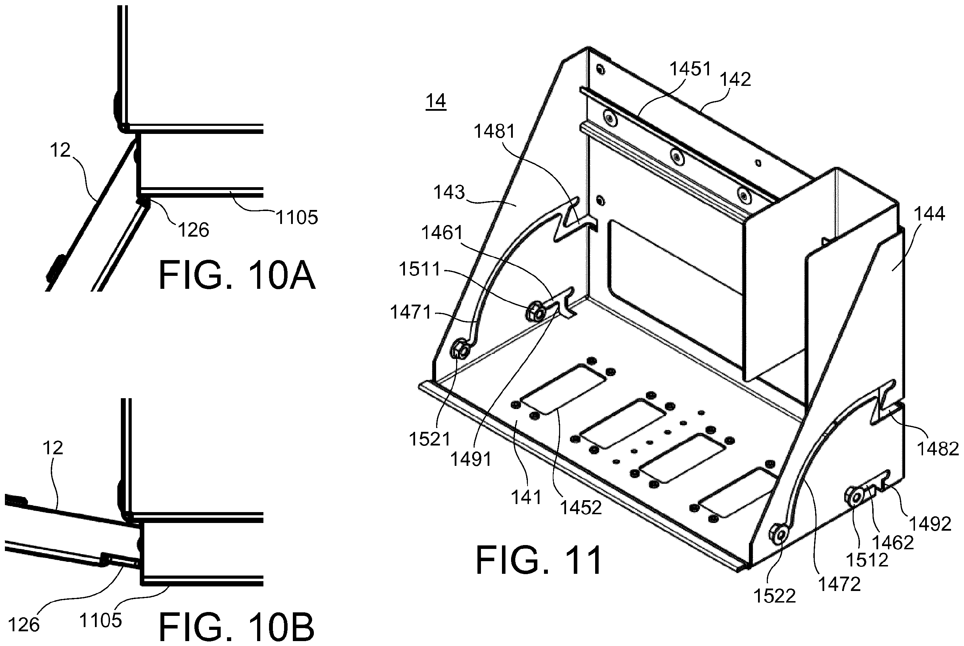

La figure 9 représente les différentes plages angulaires impliquées par l'invention dans le pivotement de la porte de sécurité. Le châssis 11 est représenté symboliquement par l'ouverture 102 et la paroi gauche 1101. L'ouverture 102 définit un plan de référence à 0° (degré) pour les différentes plages angulaires. La porte de sécurité 12, une fois montée sur le châssis 11 et en l'absence de la porte extérieure 13, des plateaux 112, 113, du support basculant 14 et de tout équipement, est libre de pivoter dans une plage angulaire appelée « plage de pivotement libre » P_{PL}. Cette plage de pivotement libre P_{PL} est par exemple comprise entre - 70° et 210°. Elle inclut notamment une plage dans laquelle la porte de sécurité 12 est rentrée à l'intérieur de l'espace intérieur 101. Après montage de la porte extérieure 13 et des équipements électriques dans l'espace intérieur 101, la liberté de rotation de la porte de sécurité 12 se trouve entravée. La porte de sécurité 12 est alors libre de pivoter dans une plage angulaire appelée « plage de pivotement réduite » P_{PR}. Cette plage de pivotement réduite P_{PR} est par exemple comprise entre 0° et 150°. Par ailleurs, la protubérance 126 et le rebord supérieur 1105 du châssis 11 définissent, à l'intérieur de la plage de pivotement libre P_{PL}, une plage de translation bloquée P_{TB} et une plage de translation libre P_{TL}. La plage de translation bloquée P_{TB} est une plage angulaire dans laquelle la protubérance 126 est en vis-à-vis du rebord supérieur 1105, de sorte à limiter le déplacement en translation vers le haut de la porte de sécurité 12. Un démontage de la porte de sécurité 12 est alors empêché. La figure 10A représente un exemple de configuration dans laquelle la porte de sécurité 12 se trouve dans la plage de translation bloquée P_{TB}. La plage de translation libre P_{TL} est une plage angulaire dans laquelle la protubérance est dégagée du rebord supérieur 1105, de sorte à autoriser un déplacement en translation vers le haut de la porte de sécurité 12. La porte de sécurité 12 peut alors être démontée. La figure 10B représente un exemple de configuration dans laquelle la porte de sécurité 12 se trouve dans la plage de translation libre P_{TL}. La plage de translation bloquée P_{TB} et la plage de translation libre P_{TL} sont complémentaires l'une de l'autre dans la plage de pivotement libre P_{PL}. Afin d'empêcher un démontage de la porte de sécurité 12, le coffret électrique 10 est agencé de manière à ce que la plage de translation libre P_{TL} soit disjointe de la plage de pivotement réduite P_{PR}. Dans l'exemple de la figure 9, la plage de translation bloquée P_{TB} est comprise entre -70° et 190° et la plage de translation libre P_{TL} est comprise entre 190° et 210°.

La figure 11 représente, dans une vue en perspective, le support basculant 14, également visible sur les figures 1C et 2C. Le support basculant 14 est formé par pliage d'une plaque de tôle, afin de comporter une paroi inférieure 141, une paroi arrière 142, une paroi gauche 143 et une paroi droite 144. Le support basculant 14 comporte en outre des moyens de fixation 145, à savoir un rail de fixation 1451 et des ouvertures 1452, agencés pour fixer des équipements électriques et/ou passer des éléments de connectique. Selon une particularité de l'invention, le support basculant 14 comporte de plus, sur chacune des parois gauche 143 et droite 144, un orifice de pivotement 1461 et 1462, respectivement, et une rainure de guidage 1471 et 1472, respectivement. Les orifices de pivotement 1461 et 1462, désignés globalement par la référence 146, sont agencés pour recevoir chacun un ergot de pivotement 1511 ou 1512, respectivement. Les ergots de pivotement, désignés globalement par la référence 151, sont fixés respectivement sur la paroi gauche 1101 et sur la paroi droite 1103 du châssis 11. Les orifices de pivotement 146 et les ergots de pivotement 151 forment ainsi une liaison pivot glissant selon un axe horizontal entre le support basculant 14 et le châssis 11. Des éléments de fixation tels que des écrous peuvent être montés sur les orifices de pivotement 146 afin d'empêcher la translation du support basculant 14 par rapport au châssis 11. Les rainures de guidage 1471 et 1472, désignées globalement par la référence 147, comprennent chacune un tronçon en arc de cercle. Elles sont agencées pour recevoir chacune un ergot de guidage 1521 ou 1522, respectivement. Les ergots de guidage 1521, 1522, désignés globalement par la référence 152, sont fixés respectivement sur la paroi gauche 1101 et sur la paroi droite 1103 du châssis 11. Les rainures de guidage 147 et les ergots de guidage 152 permettent ainsi de guider le basculement du support basculant 14 entre une position dite « relevée », dans laquelle la paroi inférieure 141 est horizontale, et une position dite « basculée », dans laquelle la paroi inférieure 141 est verticale. Dans l'exemple de la figure 11, les rainures de guidage 147 se prolongent en outre sur une section remontante, remontant vers le haut lorsque le support basculant 14 est en position relevée, de manière à permettre de bloquer le support basculant 14 dans ladite position relevée. Le support basculant 14 comporte de plus, sur chacune des parois gauche 143 et droite 144, des premières rainures d'extraction 1481 et 1482, respectivement, et des deuxièmes rainures d'extractions 1491 et 1492, respectivement. La première rainure d'extraction 1481 s'étend entre la rainure de guidage 1471 et l'extrémité de la paroi gauche 143 adjacente à la paroi arrière 142 ; elle est agencée pour pouvoir recevoir l'ergot de guidage 1521. La première rainure d'extraction 1482 s'étend entre la rainure de guidage 1472 et l'extrémité de la paroi droite 144 adjacente à la paroi arrière 142 ; elle est agencée pour pouvoir recevoir l'ergot de guidage 1522. La deuxième rainure d'extraction 1491 s'étend entre l'orifice de pivotement 1461 et l'extrémité de la paroi gauche 143 adjacente à la paroi inférieure 141; elle est agencée pour pouvoir recevoir l'ergot de pivotement 1511. La deuxième rainure d'extraction 1492 s'étend entre l'orifice de pivotement 1462 et l'extrémité de la paroi droite 144 adjacente à la paroi inférieure 141; elle est agencée pour pouvoir recevoir l'ergot de pivotement 1512. Les rainures d'extraction 1481, 1482, 1491, 1492 sont en outre agencées de manière à permettre l'extraction des ergots 1511, 1512, 1521, 1522, libérant ainsi le support basculant 14 du châssis 11.

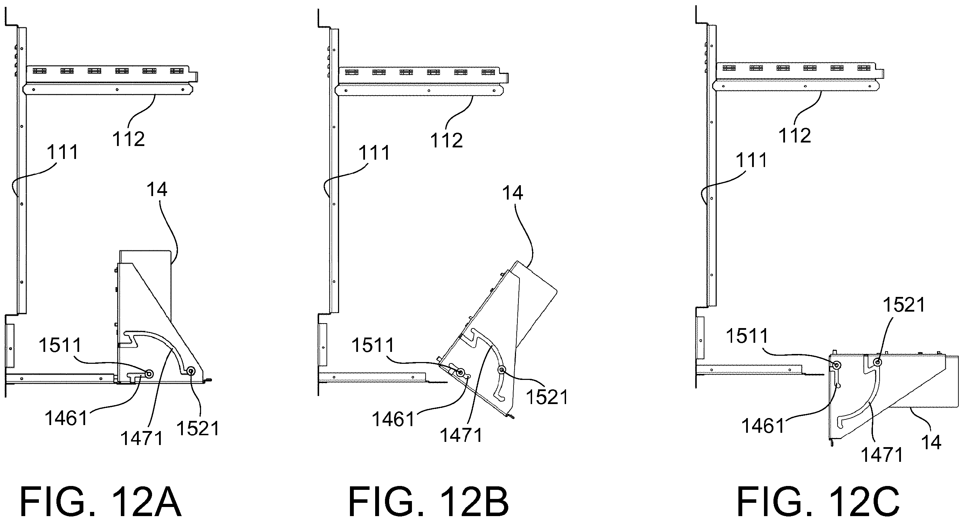

Les figures 12A, 12B et 12C illustrent le basculement du support basculant 14. Elles représentent, dans une vue de côté, le fond 111 et le plateau supérieur 112 du châssis 11, ainsi que le support basculant 14. Sur la figure 12A, le support basculant 14 est dans la position relevée. Dans cette position, le support basculant 14 et les équipements qu'il porte sont contenus dans l'espace intérieur 101 du coffret électrique 10 ; les ergots de guidage 1521, 1522 sont logés dans la section remontante des rainures de guidage 1471 et 1472, respectivement. Comme indiqué précédemment, le support basculant 14 occupe une région basse antérieure de l'espace intérieur 101 du coffret électrique 10. Sur la figure 12B, le support basculant 14 est dans une position intermédiaire entre la position relevée et la position basculée. Dans cette position, les ergots de guidage 1521, 1522 sont logés dans la section en arc de cercle des rainures de guidage 1471 et 1472, respectivement. Sur la figure 12C, le support basculant 14 est dans la position basculée. Dans cette position, le support basculant 14 et les équipements qu'il porte sont partiellement situés en dehors de l'espace intérieur 101. Ils laissent l'accès libre, depuis l'ouverture 102, à une région basse postérieure de l'espace intérieur 101. Des équipements électriques peuvent alors être installés aisément dans cette région basse postérieure, ce qui conduit à une optimisation de l'occupation de l'espace intérieur 101.

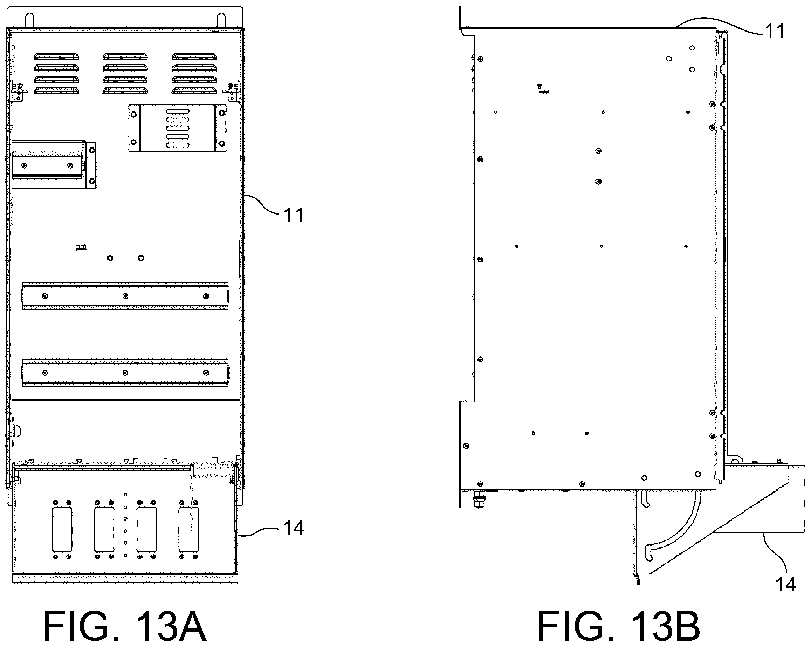

Les figures 13A et 13B représentent, dans une vue de face et dans une vue de côté, respectivement, le coffret électrique 10 équipé du support basculant 14 dans la position basculée. Elles mettent en évidence le fait que le support basculant 14 et les équipements qu'il porte font saillie par l'ouverture 102 et par la face inférieure du châssis 11.

## Revendications

1. Coffret comprenant :
▪ un châssis (11) délimitant un espace intérieur (101) pour le coffret et comprenant une ouverture (102) permettant l'accès audit espace intérieur,
▪ une porte de sécurité (12), et
▪ une charnière (1141, 1142, 1251, 1252) reliant mécaniquement la porte de sécurité (12) au châssis (11), de manière à ce que la porte de sécurité puisse pivoter, autour d'un axe de pivotement, dans une plage de pivotement libre (P_{PL}), la plage de pivotement libre incluant une position de fermeture, dans laquelle la porte de sécurité obture l'ouverture, et une position d'ouverture, dans laquelle la porte de sécurité laisse l'ouverture dégagée,
le coffret étant **caractérisé en ce que** la charnière est agencée de manière à ce que la porte de sécurité puisse être montée et démontée du châssis par un déplacement en translation le long de l'axe de pivotement,
et **en ce qu'**il comprend, en outre :
▪ des moyens de limitation du pivotement (13) pour limiter le pivotement de la porte de sécurité (12) dans une plage de pivotement réduite (P_{PR}), la plage de pivotement réduite étant moins étendue que la plage de pivotement libre (P_{PL}) et incluant la position de fermeture et la position d'ouverture,
▪ une protubérance (126) solidaire de la porte de sécurité (12) et faisant saillie dans une direction parallèle à l'axe de pivotement, et
▪ une butée (1105) solidaire du châssis et faisant saillie dans une direction perpendiculaire à l'axe de pivotement,
la protubérance (126) et la butée (1105) étant agencées pour définir, à l'intérieur de la plage de pivotement libre (P_{PL}), une plage de translation bloquée (P_{TB}), dans laquelle la protubérance est en vis-à-vis de la butée et limite le déplacement en translation de la porte de sécurité (12) le long de l'axe de pivotement, et une plage de translation libre (P_{TL}), dans laquelle la protubérance est dégagée de la butée, permettant un déplacement en translation de la porte de sécurité (12) le long de l'axe de pivotement, la plage de translation libre (P_{TL}) étant disjointe de la plage de pivotement réduite (P_{PR}).

2. Coffret selon la revendication 1, dans lequel la charnière comprend :
▪ un premier téton (1141) et un deuxième téton (1142) solidaires du châssis (11), chaque téton s'étendant selon l'axe de pivotement, et
▪ un premier œillet (1251) et un deuxième œillet (1252) formés dans la porte de sécurité,
les tétons et les œillets étant agencés de sorte que le premier téton (1141) puisse être inséré dans le premier œillet (1251) et que le deuxième téton (1142) puisse être inséré dans le deuxième œillet (1252) pour former une liaison pivot glissant selon l'axe de pivotement.

3. Coffret selon l'une des revendications 1 et 2, dans lequel la protubérance (126) est positionnée à proximité de l'axe de pivotement.

4. Coffret selon l'une des revendications 1 à 3, dans lequel la porte de sécurité (12) comporte une plaque de tôle, la protubérance (126) étant formée par pliage de la plaque de tôle.

5. Coffret selon l'une des revendications 1 à 4 comprenant, en outre, une porte extérieure (13) montée sur le châssis (11) et pouvant être déplacée entre une position de fermeture, dans laquelle elle empêche l'accès à la porte de sécurité (12) en position de fermeture, et une position d'ouverture, dans laquelle elle autorise l'accès à la porte de sécurité (12).

6. Coffret selon la revendication 5, dans lequel la porte extérieure (13) est agencée pour que, dans la position d'ouverture, elle limite le pivotement de la porte de sécurité (12) dans la plage de pivotement réduite (P_{PR}).

7. Coffret selon la revendication 5 ou 6, dans lequel la plage de pivotement libre (P_{PL}) inclut une position rentrée, dans laquelle la porte de sécurité (12) s'introduit dans l'espace intérieur (101) du coffret, le coffret étant agencé pour accueillir des équipements dans l'espace intérieur, lesdits équipements formant les moyens de limitation du pivotement.

8. Coffret selon l'une des revendications 1 à 7, dans lequel la porte de sécurité (12) comporte un orifice (127, 128) permettant l'accès à une région prédéterminée de l'espace intérieur (101) du coffret alors que la porte de sécurité (12) est en position de fermeture.

9. Coffret selon l'une des revendications 1 à 8 comprenant, en outre, un support basculant (14) agencé pour recevoir un équipement, le support basculant étant monté sur le châssis (11) de manière à pouvoir être basculé entre une position opérationnelle, dans laquelle le support basculant et l'équipement s'inscrivent dans l'espace intérieur (101) du coffret, et une position basculée, dans laquelle le support basculant et l'équipement s'inscrivent au moins partiellement en dehors de l'espace intérieur du coffret.

10. Coffret selon la revendication 9, dans lequel l'espace intérieur (101) du coffret comprend une région antérieure et une région postérieure, la région antérieure débouchant sur l'ouverture (102) et la région postérieure étant située à l'arrière de la région antérieure par rapport à l'ouverture, le support basculant (14) et l'équipement occupant la région antérieure dans la position opérationnelle et laissant l'accès libre, depuis l'ouverture, à la région postérieure dans la position basculée.

11. Coffret selon l'une des revendications 9 et 10, dans lequel la région antérieure et la région postérieure sont situées dans une partie inférieure de l'espace intérieur, le support basculant (14) étant apte à pivoter autour d'un axe de basculement situé à proximité d'une extrémité inférieure de la région antérieure et à proximité d'une extrémité postérieure de la région antérieure.

12. Coffret selon l'une des revendications 9 à 11 comprenant, en outre, un ensemble de guidage pour le support basculant, l'ensemble de guidage comportant une rainure de guidage (1471, 1472) formée sur le support basculant ou le châssis et un ergot de guidage (1521, 1522) solidaire du châssis ou du support basculant, respectivement, l'ensemble de guidage étant agencé pour que l'ergot de guidage (1521, 1522) puisse coulisser dans la rainure de guidage (1471, 1472) de manière à guider le basculement du support basculant (14).

13. Coffret selon la revendication 12, dans lequel l'ensemble de guidage comporte, en outre, une première rainure d'extraction (1481, 1482) formée sur le support basculant ou le châssis, respectivement, la première rainure d'extraction s'étendant entre la rainure de guidage (1471, 1472) et un bord du support basculant ou du châssis, respectivement, l'ensemble de guidage étant agencé pour que l'ergot de guidage (1521, 1522) puisse coulisser dans la première rainure d'extraction (1481, 1482) de manière à libérer le support basculant du châssis.

14. Coffret selon l'une des revendications 9 à 13 comprenant, en outre, un ensemble de pivotement pour le support basculant, l'ensemble de pivotement comportant un orifice de pivotement (1461, 1462) formé sur le support basculant ou le châssis et un ergot de pivotement (1511, 1512) solidaire du châssis ou du support basculant, respectivement, l'ensemble de pivotement étant agencé pour que l'ergot de pivotement (1511, 1512) puisse s'insérer dans l'orifice de pivotement (1461, 1462) de manière à former une liaison pivot glissant.

15. Coffret selon les revendications 13 et 14, dans lequel l'ensemble de pivotement comporte, en outre, une deuxième rainure d'extraction (1491, 1492) s'étendant entre l'orifice de pivotement (1461, 1462) et un bord du support basculant ou du châssis, respectivement, l'ensemble de pivotement étant agencé pour que l'ergot de pivotement (1511, 1512) puisse coulisser dans la deuxième rainure d'extraction (1491, 1492) de manière à libérer le support basculant du châssis.

## Patentansprüche

1. Kasten, enthaltend:
▪ einen Rahmen (11), der einen Innenraum (101) für den Kasten eingrenzt und eine Öffnung (102) aufweist, die den Zugang zu diesem Innenraum ermöglicht,
▪ eine Sicherheitstür (12), und
▪ ein Scharnier (1141, 1142, 1251, 1252), das die Sicherheitstür (12) mechanisch mit dem Rahmen (11) verbindet, so dass die Sicherheitstür um eine Schwenkachse in einem freien Schwenkbereich (P_{PL}) verschwenkbar ist, wobei der freie Schwenkbereich eine Schließposition, in der die Sicherheitstür die Öffnung verschließt, und eine Offenposition umfasst, in der die Sicherheitstür die Öffnung freigibt,
wobei der Kasten **dadurch gekennzeichnet ist, dass**
das Scharnier so angeordnet ist, dass die Sicherheitstür durch eine Translationsbewegung entlang der Schwenkachse an den Rahmen montiert und von diesem abmontiert werden kann,
und dass er ferner enthält:
▪ Schwenkbegrenzungsmittel (13) zur Begrenzung der Schwenkbewegung der Sicherheitstür (12) auf einen verminderten Schwenkbereich (P_{PR}), wobei der verminderte Schwenkbereich nicht so weit reicht wie der freie Schwenkbereich (P_{PL}) und die Schließposition und die Offenposition umfasst,
▪ einen Vorsprung (126), der fest mit der Sicherheitstür (12) verbunden ist und in einer Richtung parallel zur Schwenkachse vorspringt, und
▪ einen Anschlag (1105), der fest mit dem Rahmen verbunden ist und in einer Richtung senkrecht zur Schwenkachse vorspringt,
wobei der Vorsprung (126) und der Anschlag (1105) dazu angeordnet sind, innerhalb des freien Schwenkbereichs (P_{PL}) einen gesicherten Translationsbereich (P_{TB}) zu definieren, in dem der Vorsprung dem Anschlag gegenüberliegt und die Translationsbewegung der Sicherheitstür (12) entlang der Schwenkachse begrenzt, sowie freien Translationsbereich (P_{TL}), in dem der Vorsprung außer Eingriff mit dem Anschlag ist, wodurch eine Translationsbewegung der Sicherheitstür (12) entlang der Schwenkachse möglich ist, wobei der freie Translationsbereich (P_{TL}) von dem verminderten Schwenkbereich (P_{PR}) getrennt vorliegt.

2. Kasten nach Anspruch 1,
wobei das Scharnier enthält:
▪ einen ersten Zapfen (1141) und einen zweiten Zapfen (1142), die mit dem Rahmen (11) fest verbunden sind, wobei sich jeder Zapfen entlang der Schwenkachse erstreckt, und
▪ eine erste Öse (1251) und eine zweite Öse (1252), die in der Sicherheitstür ausgebildet sind,
wobei die Zapfen und Ösen so angeordnet sind, dass der erste Zapfen (1141) in die erste Öse (1251) und der zweite Zapfen (1142) in die zweite Öse (1252) eingesetzt werden kann, um entlang der Schwenkachse eine Gleit-Schwenkverbindung zu bilden.

3. Kasten nach einem der Ansprüche 1 und 2,
wobei der Vorsprung (126) in der Nähe der Schwenkachse angeordnet ist.

4. Kasten nach einem der Ansprüche 1 bis 3,
wobei die Sicherheitstür (12) eine Blechplatte enthält, wobei der Vorsprung (126) durch Umbiegen der Blechplatte gebildet ist.

5. Kasten nach einem der Ansprüche 1 bis 4,
ferner enthaltend eine Außentür (13), die am Rahmen (11) gelagert und zwischen einer Schließposition, in der sie den Zugang zur Sicherheitstür (12) in Schließposition verhindert, und einer Offenposition, in der sie den Zugang zur Sicherheitstür (12) ermöglicht, verstellbar ist.

6. Kasten nach Anspruch 5,
wobei die Außentür (13) dazu angeordnet ist, in der Offenposition die Schwenkbewegung der Sicherheitstür (12) auf den verminderten Schwenkbereich (P_{PR}) zu begrenzen.

7. Kasten nach Anspruch 5 oder 6,
wobei der freie Schwenkbereich (P_{PL}) eine eingezogene Position umfasst, in der sich die Sicherheitstür (12) in den Innenraum (101) des Kastens einfügt, wobei der Kasten dazu angeordnet ist, in dem Innenraum Einrichtungen aufzunehmen, wobei die Einrichtungen die Schwenkbegrenzungsmittel bilden.

8. Kasten nach einem der Ansprüche 1 bis 7,
wobei die Sicherheitstür (12) eine Aussparung (127, 128) aufweist, die den Zugang zu einem vorbestimmten Bereich des Innenraums (101) des Kastens ermöglicht, während sich die Sicherheitstür (12) in Schließposition befindet.

9. Kasten nach einem der Ansprüche 1 bis 8,
ferner enthaltend eine kippbare Halterung (14), die dazu angeordnet ist, eine Einrichtung aufzunehmen, wobei die kippbare Halterung am Rahmen (11) so gelagert ist, dass sie zwischen einer Betriebsposition, in der die kippbare Halterung und die Einrichtung im Innenraum (101) des Kastens einliegen, und einer Kippposition, in der die kippbare Halterung und die Einrichtung zumindest teilweise außerhalb des Innenraums des Kastens liegen, kippbar ist.

10. Kasten nach Anspruch 9,
wobei der Innenraum (101) des Kastens einen vorderen Bereich und einen hinteren Bereich aufweist, wobei der vordere Bereich zur Öffnung (102) mündet und der hintere Bereich in Bezug auf die Öffnung hinter dem vorderen Bereich angeordnet ist, wobei die kippbare Halterung (14) und die Einrichtung in Betriebsposition den vorderen Bereich einnehmen und in Kippposition einen Zugang von der Öffnung zum hinteren Bereich freigeben.

11. Kasten nach einem der Ansprüche 9 und 10,
wobei sich der vordere Bereich und der hintere Bereich in einem unteren Abschnitt des Innenraums befinden, wobei die kippbare Halterung (14) um eine Kippachse schwenkbar ist, die sich in der Nähe eines unteren Endes des vorderen Bereichs und in der Nähe eines hinteren Endes des vorderen Bereichs befindet.

12. Kasten nach einem der Ansprüche 9 bis 11,
ferner enthaltend eine Führungsanordnung für die kippbare Halterung, wobei die Führungsanordnung eine an der kippbaren Halterung bzw. dem Rahmen ausgebildete Führungsnut (1471, 1472) und einen fest mit dem Rahmen bzw. der kippbaren Halterung verbundenen Führungsstift (1521, 1522) enthält, wobei die Führungsanordnung so angeordnet ist, dass der Führungsstift (1521, 1522) in der Führungsnut (1471, 1472) verschiebbar ist, um die Kippbewegung der kippbaren Halterung (14) zu führen.

13. Kasten nach Anspruch 12,
wobei die Führungsanordnung ferner eine erste Auszugsnut (1481, 1482) aufweist, die an der kippbaren Halterung bzw. dem Rahmen ausgebildet ist, wobei sich die erste Auszugsnut zwischen der Führungsnut (1471, 1472) und einer Kante der kippbaren Halterung bzw. des Rahmens erstreckt, wobei die Führungsanordnung so angeordnet ist, dass der Führungsstift (1521, 1522) in der ersten Auszugsnut (1481, 1482) verschiebbar ist, um die kippbare Halterung vom Rahmen zu lösen.

14. Kasten nach einem der Ansprüche 9 bis 13,
ferner enthaltend eine Schwenkanordnung für die kippbare Halterung, wobei die Schwenkanordnung eine an der kippbaren Halterung bzw. dem Rahmen ausgebildete Schwenkaussparung (1461, 1462) und einen fest mit dem Rahmen bzw. der kippbaren Halterung verbundenen Schwenkstift (1511,1512) enthält, wobei die Schwenkanordnung so angeordnet ist, dass der Schwenkstift (1511, 1512) in die Schwenkaussparung (1461, 1462) eingreifen kann, um eine Gleit-Schwenkverbindung zu bilden.

15. Kasten nach Anspruch 13 und 14,
wobei die Schwenkanordnung ferner eine zweite Auszugsnut (1491, 1492) aufweist, die sich zwischen der Schwenkaussparung (1461, 1462) und einer Kante der kippbaren Halterung bzw. des Rahmens erstreckt, wobei die Schwenkanordnung so angeordnet ist, dass der Schwenkstift (1511, 1512) in der zweiten Auszugsnut (1491, 1492) verschiebbar ist, um die kippbare Halterung von dem Rahmen zu lösen.

## Claims

1. Box comprising:
▪ a frame (11) delimiting an interior space (101) for the box and comprising an opening (102) allowing access to said interior space,
▪ a security door (12) and
▪ a hinge (1141, 1142, 1251, 1252) mechanically connecting the security door (12) to the frame (11), such that the security door can pivot about a pivot access in a free pivoting range (P_{PL}), the free pivoting range including a closed position, in which the security door closes the opening, and an open position, in which the security door leaves the opening free,
the box being **characterised in that** the hinge is arranged such that the security door can be mounted and removed from the frame by displacement in translation along the pivot axis,
and **in that** it further comprises:
▪ pivot limiting means (13) for limiting the pivoting of the security door (12) in a reduced pivoting range (P_{PR}), the reduced pivoting range being less extensive than the free pivoting range (P_{PL}) and including the closed position and the open position,
▪ a protrusion (126) joined to the security door (12) and projecting in a direction parallel to the pivot axis, and
▪ a stop (1105) joined to the frame and projecting in a direction perpendicular to the pivot axis,
the protrusion (126) and the stop (1105) being arranged to define, within the free pivoting range (P_{PL}), a blocked translation range (P_{TB}), in which the protrusion is opposite the stop and limits the translational movement of the security door (12) along the pivot axis and a free translation range (P_{TL}), in which the protrusion is disengaged from the stop, allowing a translational movement of the security door (12) along the pivot axis, the free translation range (P_{TL}) being separate from the reduced pivot range (P_{PR}).

2. Box according to claim 1, wherein the hinge comprises:
▪ a first pin (1141) and a second pin (1142) joined to the frame (11), each pin extending along the pivot axis, and
▪ a first eyelet (1251) and a second eyelet (1252) formed in the security door,
the pins and the eyelets being arranged such that the first pin (1141) can be inserted into the first eyelet (1251) and the second pin (1142) can be inserted into the second eyelet (1252) to form a pivot connection sliding along the pivot axis.

3. Box according to any of claims 1 and 2, wherein the protrusion (126) is positioned in the proximity of the pivot axis.

4. Box according to any of claims 1 to 3, wherein the security door (12) comprises a sheet metal plate, the protrusion (126) being formed by bending the sheet metal plate.

5. Box according to any of claims 1 to 4, further comprising an exterior door (13) mounted on the frame (11) and able to be displaced between a closed position, in which it prevents access to the security door (12) in the closed position, and an open position, in which it allows access to the security door (12).

6. Box according to claim 5, wherein the exterior door (13) is arranged so that in the open position, it limits the pivoting of the security door (12) in the reduced pivoting range (P_{PR}).

7. Box according to claim 5 or 6, wherein the free pivoting range (P_{PL}) includes a retracted position, in which the security door (12) enters the interior space (101) of the box, the box being arranged to accommodate equipment in the interior space, said equipment forming the pivot limiting means.

8. Box according to any of claims 1 to 7, wherein the security door (12) comprises an opening (127, 128) for allowing access to a predetermined region of the interior space (101) of the box when the security door (12) is in the closed position.

9. Box according to any of claims 1 to 8, further comprising a tiltable support (14) arranged to receive a piece of equipment, the tiltable support being mounted on the frame (11) so as to be able to be tilted between an operational position, in which the tiltable support and the equipment accommodate within the interior space (101) of the box, and a tilted position, in which the tiltable support and the equipment project at least partly outside of the interior space of the box.

10. Box according to claim 9, wherein the interior space (101) of the box comprises a front region and a rear region, the front region opening into the opening (102) and the rear region being situated to the rear of the front region with respect to the opening, the tiltable support (14) and the equipment occupying the front region in the operational position and leaving free access from the opening to the rear region in the tilted position.

11. Box according to any of claims 9 and 10, wherein the front region and the rear region are located in a lower part of the interior space, the tilting support (14) being capable of pivoting about a tilting axis located in the vicinity of a lower end of the front region and in the vicinity of a rear end of the front region.

12. Box according to any of claims 9 to 11 further comprising a guide assembly for the tiltable support, the guide assembly including a guiding groove (1471, 1472) formed on the tiltable support or the frame and a guide pin (1521, 1522) joined to the frame or tiltable support respectively, the guide assembly being arranged so that the guide pin (1521, 1522) can slide in the guiding groove (1471, 1472) so as to guide the tilting of the tiltable support (14).

13. Box according to claim 12, wherein the guide assembly further comprises a first extraction groove (1481, 1482) formed on the tiltable support or the frame respectively, the first extraction groove extending between the guiding groove (1471, 1472) and an edge of the tiltable support or frame respectively, the guide assembly being arranged such that the guide pin (1521, 1522) can slide in the first extraction groove (1481, 1482) so as to release the tiltable support from the frame.

14. Box according to any of claims 9 to 13 further comprising a pivot assembly for the tiltable support, the pivot assembly comprising a pivot hole (1461, 1462) formed on the tiltable support or the frame and a pivot lug (1511, 1512) joined to the frame or the tiltable support respectively, the pivot assembly being arranged such that the pivot lug (1511, 1512) can be inserted into the pivot hole (1461, 1462) so as to form a sliding pivot connection.

15. Box according to claims 13 and 14, wherein the pivot assembly further comprises a second extraction groove (1491, 1492) extending between the pivot hole (1461, 1462) and an edge of the tiltable support or frame respectively, the pivot assembly being arranged such that the pivot lug (1511, 1512) can slide in the second extraction groove (1491, 1492) so as to release the tiltable support from the frame.
